# EUROPEAN PATENT SPECIFICATION

(11) **EP 3 371 802 B1**
(45) Date of publication and mention of the grant of the patent: **26.06.2019**
(21) Application number: 16793989.1
(22) Date of filing: 03.11.2016
(51) Int. Cl.: G09B 23/34, G09B 23/32

(54) **MODULAR MANNEQUIN**
MODULARES MANNEQUIN
MANNEQUIN MODULAIRE

(30) Priority: 03.11.2015 GB 201519444
(43) Date of publication of application: 12.09.2018
(73) Proprietor: Jarratt, Christopher, Manchester, Greater Manchester M43 7FR (GB)
(72) Inventor: Jarratt, Christopher, Manchester, Greater Manchester M43 7FR (GB)
(74) Representative: HGF Limited
(86) International application number: PCT/GB2016/053417
(87) International publication number: WO 2017/077306

(56) References cited:
- CN-A- 101 336 787
- GB-A- 2 503 717
- US-A1- 2002 152 534
- US-A1- 2007 131 043
- US-B1- 8 827 720
- Anonymous: "MANIKIN OBESITY SUITS", , 26 September 2015 (2015-09-26), pages 1-3, XP055333901, Retrieved from the Internet: URL:http://web.archive.org/web/20150926084 250/http://www.simusuit.com/manikin-obesit y-suits.html [retrieved on 2017-01-10]
- Anonymous: "About Bariquins", , 10 January 2017 (2017-01-10), pages 1-2, XP055333482, Retrieved from the Internet: URL:http://www.bariquins.com/about-us/ [retrieved on 2017-01-10]

## Description

### TECHNICAL FIELD

The invention relates to a modular mannequin. The invention particularly, though not necessarily, relates to a modular mannequin which is suitable for training healthcare professionals in the treatment of bariatric patients.

### BACKGROUND

Obesity levels in the UK have more than trebled in the last 30 years and it is now estimated that one in every four adults living in the UK is obese. Moreover, it is estimated that there are over 670 million obese people worldwide. Consequently, hospitals and other healthcare providers are treating increasing numbers of bariatric patients, i.e. patients who are classified as being clinically obese. Caring for these patients presents healthcare professionals and others, such as emergency service personnel, with a number of challenges, including how to safely and respectfully move a bariatric patient. Moving or repositioning a bariatric patient can cause healthcare professionals to sustain musculoskeletal injuries, e.g. sprains, strains and excessive spinal loading. There is also a risk of injury to a bariatric patient during their moving or repositioning. Plainly, there is a need to ensure healthcare professionals are adequately trained before administering treatment to bariatric patients. Therefore, bariatric mannequins, i.e. mannequins being of a suitable size and/or weight to simulate an obese human, are used to train healthcare professionals in the treatment of bariatric patients. US 2007/131073 A1 discloses a mannequin having parts, each of which may be filled with a fluid. Connections between the parts allow for movement of the parts such that the mannequin can be adjusted into multiple positions. CN 101336787 A discloses a modular mannequin with flexible couplings for coupling mannequin members made of polymer plastic material.

It is an object of embodiments of the invention to at least mitigate one or more of the problems associated with prior art arrangements.

### SUMMARY OF THE INVENTION

According to the invention, there is provided a modular mannequin comprising a plurality of individual mannequin sub-parts, a removable material contained within respective compartments of the individual mannequin sub-parts so that the total weight of the modular mannequin is at least 100kg and one or more flexible couplings comprising a flexible material, each of the flexible couplings being configured to releasably connect two or more of the plurality of individual mannequin sub-parts to one another. This arrangement may improve the ease of which a bariatric mannequin, i.e. a mannequin having a sufficient size and/or weight to simulate an obese human, is transported and/or stored when not in use and may improve the simulation of an anatomically correct weight distribution in such a mannequin.

In certain embodiments, one or more of the compartments are each selectively sealable.

In certain embodiments, the modular mannequin may further comprise one or more fastening means, each of the fastening means being associated with at least one respective flexible coupling and configured to facilitate the releasable connection of two or more of the plurality of individual mannequin sub-parts to one another. Optionally, one or more of the fastening means each comprises a male portion and a female portion, the female portion being configured to receive and selectively retain the male portion.

In certain embodiments, the modular mannequin may further comprise one or more adjustment means, each of the adjustment means being associated with at least one respective flexible coupling and configured to permit adjustment of a length of each respective flexible coupling. Optionally, one or more of the adjustment means may each comprise a hook and loop fastener. Additionally or alternatively, one or more of the adjustment means may each comprise a slide buckle.

One or more of the flexible couplings may be configured to selectively provide a hinge between a first individual mannequin sub-part and a second individual mannequin sub-part when the first individual mannequin sub-part and the second individual mannequin sub-part are connected to one another.

Preferably, one or more of the flexible couplings each comprises a flexible fabric. Additionally or alternatively, one or more of the individual mannequin sub-parts each comprises a flexible fabric.

In certain embodiments, the modular mannequin may further comprise the at least one removable material received by at least one of the plurality of individual mannequin sub-parts. In certain embodiments, the modular mannequin may further comprise at least two removable materials received by at least one of the plurality of individual mannequin sub-parts, each of the removable materials having a different density to that of the at least one other of the at least two removable materials.

The total weight of the modular mannequin may be any predetermined weight between 100kg and 500kg. The modular mannequin may be 100cm or greater in at least one dimension when fully assembled. The modular mannequin may be any predetermined size between 100cm and 300cm in at least one dimension when fully assembled.

In certain embodiments, the modular mannequin may further comprise one or more prosthetic body parts, each of the prosthetic body parts being configured to be releaseably connectable to one or more of the plurality of individual mannequin sub-parts. Optionally, two or more of the plurality of individual mannequin sub-parts may be configured to provide a limb of the modular mannequin. Two or more of the plurality of individual mannequin sub-parts may be configured to provide a torso of the modular mannequin.

In certain embodiments, the modular mannequin may further comprise an outer casing configured to selectively at least partially receive two or more of the individual mannequin sub-parts.

### BRIEF DESCRIPTION OF THE DRAWINGS

Embodiments of the invention will now be described by way of example only, with reference to the accompanying figures, in which:
Figure 1 shows a perspective view of a modular mannequin according to an embodiment of the invention;
Figure 2 shows a perspective view of selective sub-parts of the modular mannequin shown in Figure 1;
Figure 3 shows a side view of a limb of the modular mannequin shown in Figure 1, the limb being configured to include a non-flexing hinge; and
Figure 4 shows a further side view of the limb shown in Figure 3, the limb being configured to include a flexing hinge.

### DETAILED DESCRIPTION

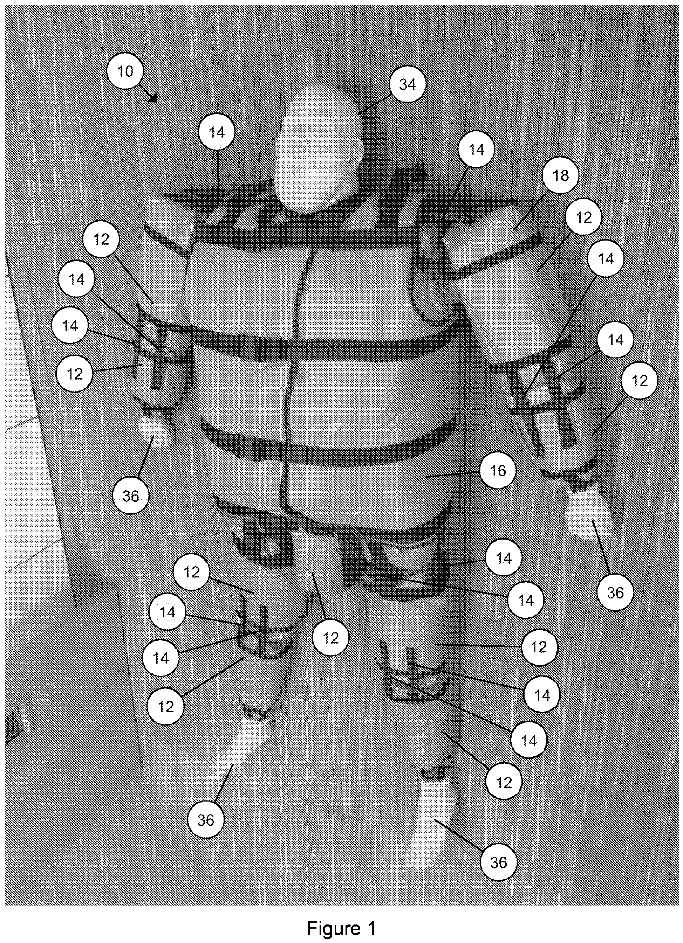

Figure 1 shows a modular mannequin 10 according to an embodiment of the invention. The mannequin 10 is a bariatric mannequin, i.e. the mannequin 10 is intended for use in the training of healthcare professionals and/or others in the safe and dignified treatment of bariatric patients. The mannequin 10 comprises a plurality of individual mannequin sub-parts 12 and a plurality of flexible couplings 14. As shown in the illustrated embodiment, the plurality of flexible couplings 14 comprise a flexible material. The flexible couplings 14 are configured to releasably connect two or more of the individual mannequin sub-parts 12 to one another. Moreover, each of the individual mannequin sub-parts 12 are configured to receive a removable material.

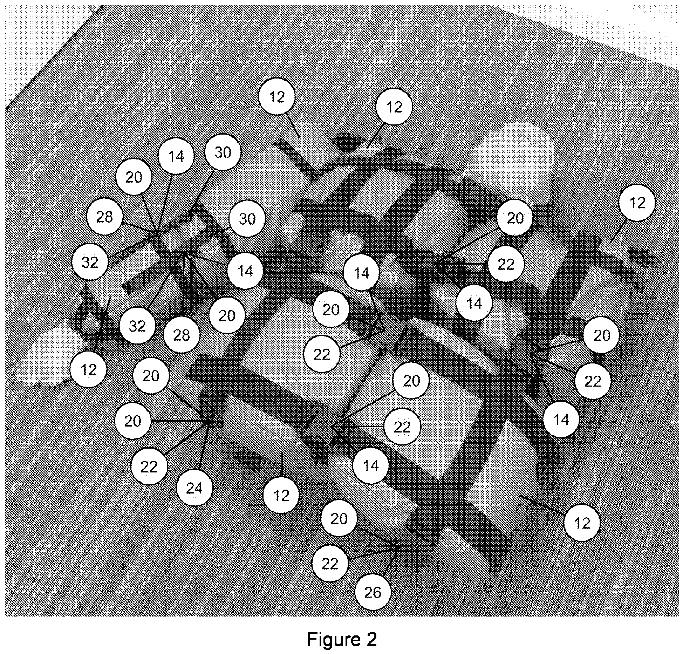

The individual mannequin sub-parts 12 may be configured to simulate various portions of human anatomy. Consequently, when connected by the flexible couplings 14, the mannequin sub-parts 12 are arranged relative to one another such that the mannequin 10 may simulate the overall external anatomy of an obese human adult. As illustrated in the accompanying figures, two or more of the plurality of individual mannequin sub-parts 12 may be configured to provide a limb of the modular mannequin, e.g. two of the individual mannequin sub-parts parts may, when connected to one another, provide an arm or leg of the modular mannequin 10. Also, as best illustrated in Figure 2, two or more of the plurality of individual mannequin sub-parts 12 may be configured to provide a torso of the modular mannequin 10. Further, the mannequin may comprise an outer casing 16 to at least partially receive two or more of the individual mannequin sub-parts 12. In the illustrated embodiment, the outer casing 16 is in the form of a vest and is configured to receive a number of the individual mannequin sub-parts 12 which, when connected together, comprise the torso of the mannequin 10. The addition of the outer casing 16 may provide a more realistic appearance and/or improved functionality of the assembled modular mannequin 10.

The individual mannequin sub-parts 12 each comprise a respective compartment configured to contain the removable material therein. Further, each of the compartments may comprise a respective opening (not shown) configured to permit the receipt and/or removal of the removable material from each of the compartments. The openings may each comprise a respective zip or other means to selectively seal each of the compartments, and thereby selectively retain the removable material therein. In certain embodiments, the removable material may be a particulate solid, e.g. sand, gravel, plastic beads. However, while any suitable particulate solid may be used, shredded car tyres or other shredded rubber products have been found to be particularly suitable. In certain embodiments, the removable material may be a liquid, e.g. water. In certain embodiments, the removable material may comprise multiple removable sub-materials, each removable sub-material having a different density to that of at least one other removable sub-material. Combinations of sub-materials may permit the weight of the individual mannequin sub-parts 12 (and, consequently, the overall weight of the assembled modular mannequin 10) to be controlled for a given volume of the individual mannequin sub-parts 12 and/or for a given volume of the removable material. For example, in certain embodiments, expanded polystyrene beads may be combined with a denser material, e.g. shredded rubber, and the combined sub-materials used to fill the individual mannequin sub-parts 12. By varying the proportion of one sub-material relative to another, the weight of the modular mannequin 10 may be easily modified by an end user. Moreover, the ability control the weight of the mannequin 10 and/or the weight of each of the sub-parts 12 may allow improve the simulation of an anatomically correct weight distribution.

One or more of the individual mannequin sub-parts 12 may be fabricated from a flexible fabric 18. The fabric 18 may be woven or non-woven. In certain embodiments, the fabric 18 may comprise a base-cloth and a coating. In certain embodiments, it may be desirable that the fabric 18 have flame retardant properties. In certain embodiments, it may be desirable for the fabric 18 to have anti-microbial properties. Of course, it will be understood that the exact properties of the fabric 18 will depend upon the intended use of the modular mannequin 10. Moreover, the individual mannequin sub-parts 12 may be fabricated from any suitable material. In certain embodiments, the fabric 18 will be at least durable, waterproof and easy to clean.

In certain embodiments, the plurality of flexible couplings 14 may each comprise one or more flat strips of flexible, i.e. pliable, fabric. The flat strips of fabric may be woven fabric strips. Each of the flat strips of fabric may be any suitable width. However, in preferable embodiments the width of the flat strips of fabric may be between 2cm and 10cm. In certain embodiments, the plurality of flexible couplings 14 may each comprise one or more flexible cords. The plurality of flexible couplings 14 may each comprise one of a plurality of first flexible portions. In certain embodiments, the plurality of flexible couplings 14 may each further comprise one of a plurality of second flexible portions. Each of first flexible portions may be associated with one of the individual mannequin sub-parts 12 and each of the second flexible portions may be associated with another of the sub-parts 12. Therefore, with the first and second flexible portions each associated with respective individual mannequin sub-parts 12, each of first flexible portions may be tied, i.e. knotted, to at least one of the second flexible portions to releaseably connect two or more of the individual mannequin sub-parts 12 to one another.

Referring now to the numerals indicted in Figure 2, the modular mannequin 10 may further comprise fastening means 20. The fastening means 20 may be associated with at least one of the flexible couplings 14 and configured to facilitate the releasable connection of two or more of the individual mannequin sub-parts 12 to one another. The fastening means 20 may facilitate connection and disconnection of the individual mannequin sub-parts 12 in order to rapidly and easily assemble and dissemble the modular mannequin 10. As shown in the illustrated embodiment, the fastening means 20 may each comprise a plurality of side release buckles 22. Therefore, in certain embodiments, one or more of the fastening means 20 may each comprise a male portion 24 and female portion 26, the female portion 26 being configured to receive and selectively retain the male portion 24 therein. It will be understood that each male portion 24 may be associated with one of the individual mannequin sub-parts 12 and that each corresponding female portion may be associated with another of the sub-parts 12. Therefore, each of the male portions 24 may be selectivity retained within one of the female portions 26 to releaseably connect two or more of the individual mannequin sub-parts 12 to one another. Moreover, each male portion 24 may be associated with one of the plurality of first flexible portions and each corresponding female portion 26 may be associated with one of the plurality of second flexible portions.

The fastening means 20 may additionally or alternatively comprise a plurality of hook and loop fasteners 28 (this type of fastener is often colloquially referred to using the registered trade mark "VELCRO") and a plurality of rings 30, each of the rings 30 being configured to allow a portion of one or more of the plurality of hook and loop fasteners 28 to pass therethrough. Each of the hook and loop fasteners 28 may comprise a flexible strip of fabric having a hook portion at a respective first end and a loop portion at a respective opposing second end. Thus, as is conventional, folding one of the plurality of the hook and loop fasteners 28 back on itself permits fastening the hook and loop fastener 28 by joining together the respective hook and loop portions. Each of the hook and loop fasteners 28 may be associated with one of the individual mannequin sub-parts 12 and each of the plurality of rings 30 may be associated with another of the sub-parts 12. Therefore, each of the plurality of hook and loop fasteners 28 may be passed through one or more of the plurality of rings 30, folded back on itself and fastened to releaseably connect two or more of the individual mannequin sub-parts 12 to one another. It will also be understood that each of the plurality of hook and loop fasteners 28 may be associated with one of the plurality of first flexible portions and each of the plurality of rings 30 be associated with one of the plurality of second flexible portions.

In certain embodiments, the modular mannequin 10 may further comprise adjustment means 32. The adjustment means 32 may be associated with at least one of the flexible couplings 14 and configured to permit adjustment of a length of each of the respective flexible couplings 14. As shown in the illustrated embodiment, one or more of the hook and loop fasteners 28 may provide the adjustment means 28. Accordingly, one or more of the hook and loop fasteners 28 may simultaneously provide the fastening means 20 and the adjustment means 32 associated with a single flexible coupling 14. In certain embodiments, the adjustment means may comprise a slide buckle (not shown).

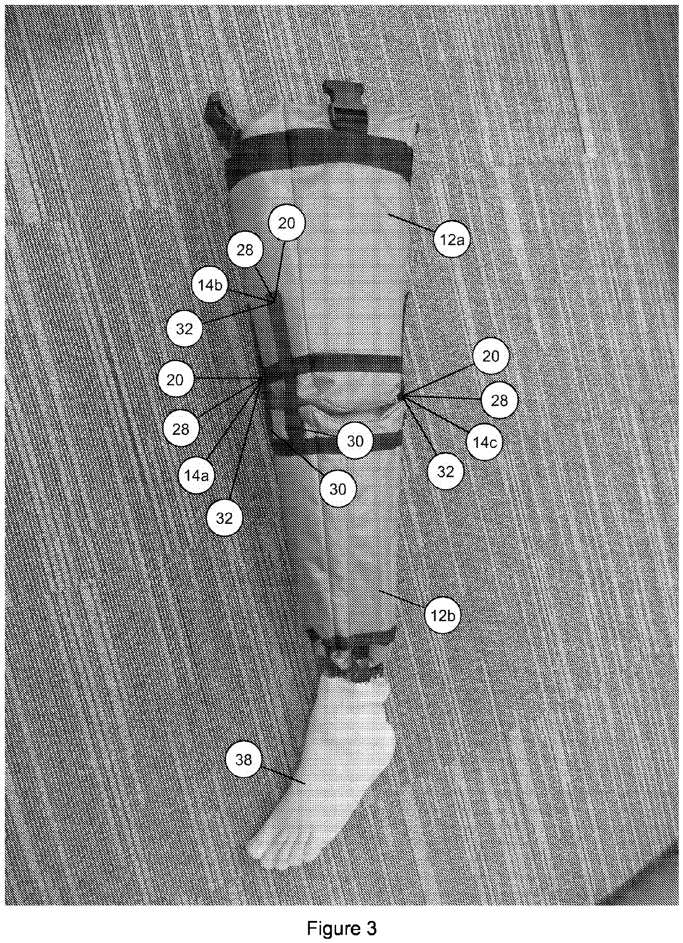

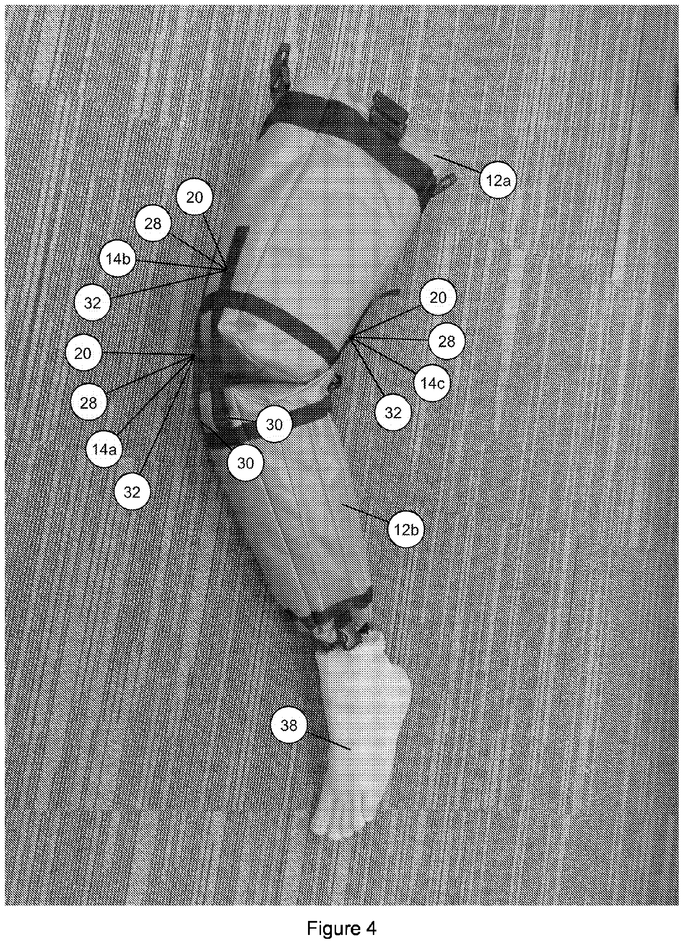

One or more of the flexible couplings 14 may be configured to selectively provide a hinge, i.e. a joint, between at least two of the plurality of individual mannequin sub-parts 12 when said individual mannequin sub-parts 12 are connected to one another. By way of example, Figure 3 and Figure 4 show two of the plurality of individual mannequin sub-parts 12a, 12b connected to one another by four of the plurality of flexible couplings 14a, 14 b, 14c. The flexible couplings 14a, 14b, 14c are configured to selectively provide a hinge between the connected mannequin sub-parts 12a, 12b.

Figure 3 shows the hinge in a first configuration, in which the flexible couplings 14a, 14b, 14c limit relative movement of the connected mannequin sub-parts 12a, 12b. In the first configuration, the hinge is in a non-flexing condition. Figure 4 shows the hinge in a second configuration, in which the flexible couplings 14a, 14b, 14c permit relative movement of the connected mannequin sub-parts 12a, 12b. In the second configuration, the hinge is in a flexing condition. The length of one or more of the flexible couplings 14a, 14b, 14c associated with the hinge may be adjusted, by way of the adjustment means 32 (as described above), to transition the hinge between the first and second configurations. In the illustrated embodiment, two of the plurality of flexible couplings 14a, 14b are longer in the second configuration than in first configuration, thereby permitting relative movement of the connected individual mannequin sub-parts 12a, 12b. The adjustment means 32 may be adjusted to limit the maximum angle of flexing between the connected individual mannequin sub-parts 12a, 12b, i.e. the length of the flexible couplings 14a, 14b may be selected to limit the maximum angle of flexing. While any suitable angle is possible, the maximum angle may be limited to an angle of 90° or less. In certain embodiments, the maximum angle may be limited to an angle of 45° or less. Limiting the maximum angle of flexing between the connected individual mannequin sub-parts 12a, 12b may improve the simulation of an anatomically correct human joint. In certain embodiments, two or more of the plurality of flexible couplings 14 may together selectively provide the hinge. In certain embodiments, three or more of the plurality of flexible couplings 14 may together selectively provide the hinge. Of course, any suitable number of the plurality of flexible couplings 14 may together selectively provide the hinge.

The modular mannequin 10 may further comprise one or more prosthetic body parts. Each of the prosthetic body parts may be releaseably connectable to one or more of the plurality of individual mannequin sub-parts 12. Each of the prosthetic body parts may be releaseably connectable in a manner as described above regarding the releasable connection of two or more of the individual mannequin sub-parts 12. In the illustrated embodiment, the modular mannequin 10 further comprises prosthetic body parts including a prosthetic head 34, prosthetic hands 36 and prosthetic feet 38. In certain embodiments, the prosthetic head 34, prosthetic hands 36 and prosthetic feet 38 may each be provided in isolation, in combination with one another or in combination with additional prosthetic body parts.

In addition to training healthcare professionals in the treatment of bariatric patients, the modular mannequin 10 may be used to train others in the moving and lifting of obese persons. Therefore, by way of non-limiting example only, fire and rescue services may use the modular mannequin 10 to simulate the rescue of an obese person. Further, the modular mannequin 10 may be used to train police officers, custody staff and/or prison officers in the handling of obese prisoners.

It will be understood that the exact size and weight of the modular mannequin 10 may vary depending upon the particular requirements of an end user. The modular mannequin 10 may be configured to simulate a patient of any size and/or weight, including children. However, in certain embodiments, the total weight of the assembled modular mannequin 10, including the sum of the removable material received by each of the individual mannequin sub-parts 12, may be between 100kg and 500kg. In certain embodiments, the total weight of the assembled modular mannequin 10, including the sum of the removable material received by each of the individual mannequin sub-parts 12, may be 500kg or greater. It will also be understood that the total number of individual mannequin sub-parts may be any suitable number. In certain embodiments, the total number of individual mannequin sub-parts may be five sub-parts or more. In certain embodiments, the total number of individual mannequin sub-parts may be ten sub-parts or more.

While the embodiment of the invention shown in the accompanying figures simulates the overall external anatomy of an obese human adult, the invention is not limited to simulating human anatomy. Indeed, the individual mannequin sub-parts 12 may be configured to simulate various portions of animal anatomy. Thus, the assembled modular mannequin 10 may simulate the overall external anatomy of an animal, e.g. a horse. Such a mannequin may aid in the training of fire and rescue services and/or veterinarians to deal with injured or trapped large and/or heavy animals, including domesticated animals, wild animals, and animals kept in captivity. Particularly when configured to simulate large animals, the total weight of the assembled modular mannequin 10, including the sum of the removable material received by each of the individual mannequin sub-parts 12, may be 500kg or greater.

Any embodiment of the invention may improve the ease of which a bariatric mannequin, i.e. a mannequin having a sufficient size and/or weight to simulate an obese human, is transported and/or stored when not in use. Additionally or alternatively, embodiments of the invention may improve the simulation of an anatomically correct weight distribution in a bariatric mannequin. Moreover, any embodiment of the invention may be robust, easy to clean and easy to repair. Any embodiment of the invention may provide an economic and durable mannequin suitable for training healthcare professionals in the treatment of bariatric patients. Embodiments of the invention may be supplied to an end user with or without the removable material, as supplying without the removable material may significantly reduce delivery costs. The end user may then configure the invention to contain the removable material upon delivery.

Each feature disclosed in this specification (including any accompanying claims and drawings), may be replaced by alternative features serving the same, equivalent or similar purpose, unless expressly stated otherwise. Thus, unless expressly stated otherwise, each feature disclosed is one example only of a generic series of equivalent or similar features.

## Claims

1. A modular mannequin (10) comprising:
a plurality of individual mannequin sub-parts (12); and
a removable material contained within respective compartments of the individual mannequin sub-parts so that the total weight of the modular mannequin is at least 100kg;
**characterised in that** the modular mannequin (10) further comprises one or more flexible couplings (14) comprising a flexible material, each of the flexible couplings being configured to releasably connect two or more of the plurality of individual mannequin sub-parts (12) to one another.

2. A modular mannequin (10) according to claim 1, wherein one or more of the compartments (12) are each selectively sealable.

3. A modular mannequin (10) according to any preceding claim, wherein one or more of the individual mannequin sub-parts (12) each comprises a flexible fabric (18).

4. A modular mannequin (10) according to any preceding claim, further comprising one or more fastening means (20), each of the fastening means being associated with at least one respective flexible coupling (14) and configured to facilitate the releasable connection of two or more of the plurality of individual mannequin sub-parts (12) to one another.

5. A modular mannequin (10) according to claim 4, wherein one or more of the fastening means (20) each comprises a male portion (24) and a female portion (26), the female portion being configured to receive and selectively retain the male portion.

6. A modular mannequin (10) according to any preceding claim, further comprising one or more adjustment means (32), each of the adjustment means being associated with at least one respective flexible coupling (14) and configured to permit adjustment of a length of each respective flexible coupling.

7. A modular mannequin (10) according to claim 6, wherein one or more of the adjustment means (32) each comprises a hook and loop fastener (28).

8. A modular mannequin (10) according to claim 6 or 7, wherein one or more of the adjustment means (32) each comprises a slide buckle.

9. A modular mannequin (10) according to any preceding claim, wherein one or more of the flexible couplings (14) is configured to selectively provide a hinge between a first individual mannequin sub-part (12a) and a second individual mannequin sub-part (12b) when the first individual mannequin sub-part and the second individual mannequin sub-part are connected to one another.

10. A modular mannequin (10) according to any preceding claim, wherein one or more of the flexible couplings (14) each comprises a flexible fabric.

11. A modular mannequin (10) according to any preceding claim, further comprising at least two removable materials received by at least one of the plurality of individual mannequin sub-parts (12), each of the removable materials having a different density to that of the at least one other of the at least two removable materials.

12. A modular mannequin (10) according to any preceding claim, wherein the modular mannequin is 100cm or greater in at least one dimension when fully assembled.

13. A modular mannequin (10) according to any preceding claim, wherein two or more of the plurality of individual mannequin sub-parts (12) are configured to provide a limb of the modular mannequin.

14. A modular mannequin (10) according to any preceding claim, wherein two or more of the plurality of individual mannequin sub-parts (12) are configured to provide a torso of the modular mannequin.

15. A modular mannequin (10) according to any preceding claim, further comprising an outer casing (16) configured to selectively at least partially receive two or more of the individual mannequin sub-parts (12).

## Patentansprüche

1. Modulare Schaufensterpuppe (10), umfassend:
eine Vielzahl von einzelnen Schaufensterpuppe-Unterbauteilen (12); und
ein entfernbares Material, das im Inneren von jeweiligen Fächern der einzelnen Schaufensterpuppe-Unterbauteile enthalten ist, so dass das Gesamtgewicht der modularen Schaufensterpuppe mindestens 100kg beträgt;
**dadurch gekennzeichnet, dass** die modulare Schaufensterpuppe (10) ferner eine oder mehrere flexible Kopplungen (14) umfasst, die ein flexibles Material umfassen, wobei jede der flexiblen Kopplungen dazu konfiguriert ist, zwei oder mehr der Vielzahl von einzelnen Schaufensterpuppe-Unterbauteilen (12) lösbar miteinander zu verbinden.

2. Modulare Schaufensterpuppe (10) nach Anspruch 1, wobei eines oder mehrere der Fächer (12) jeweils selektiv abdichtbar ist.

3. Modulare Schaufensterpuppe (10) nach einem der vorhergehenden Ansprüche, wobei eines oder mehrere der einzelnen Schaufensterpuppe-Unterbauteile (12) jeweils eine flexible Struktur (18) umfassen.

4. Modulare Schaufensterpuppe (10) nach einem der vorhergehenden Ansprüche, ferner umfassend ein oder mehrere Befestigungsmittel (20), wobei jedes der Befestigungsmittel mindestens einer jeweiligen flexiblen Kopplung (14) zugeordnet ist und dazu konfiguriert ist, die lösbare Verbindung von zwei oder mehr der Vielzahl von einzelnen Schaufensterpuppe-Unterbauteilen (12) miteinander zu ermöglichen.

5. Modulare Schaufensterpuppe (10) nach Anspruch 4, wobei eines oder mehrere der Befestigungsmittel (20) jeweils ein Steckteil (24) und ein Aufnahmeteil (26) umfasst, wobei das Aufnahmeteil dazu konfiguriert ist, das Steckteil aufzunehmen und selektiv festzuhalten.

6. Modulare Schaufensterpuppe (10) nach einem der vorhergehenden Ansprüche, ferner umfassend ein oder mehrere Justiermittel (32), wobei jedes der Justiermittel mindestens einer jeweiligen flexiblen Kopplung (14) zugeordnet ist und dazu konfiguriert ist, eine Justierung einer Länge von jeder jeweiligen flexiblen Kopplung zu erlauben.

7. Modulare Schaufensterpuppe (10) nach Anspruch 6, wobei eines oder mehrere der Justiermittel (32) jeweils einen Klettverschluss (28) umfassen.

8. Modulare Schaufensterpuppe (10) nach Anspruch 6 oder 7, wobei eines oder mehrere der Justiermittel (32) jeweils eine Gleitschnalle umfassen.

9. Modulare Schaufensterpuppe (10) nach einem der vorhergehenden Ansprüche, wobei eine oder mehrere der flexiblen Kopplungen (14) dazu konfiguriert sind, selektiv ein Gelenk zwischen einem ersten einzelnen Schaufensterpuppe-Unterbauteil (12a) und einem zweiten einzelnen Schaufensterpuppe-Unterbauteil (12b) bereitzustellen, wenn das erste einzelne Schaufensterpuppe-Unterbauteil und das zweite einzelne Schaufensterpuppe-Unterbauteil miteinander verbunden sind.

10. Modulare Schaufensterpuppe (10) nach einem der vorhergehenden Ansprüche, wobei eine oder mehrere der flexiblen Kopplungen (14) jeweils eine flexible Struktur umfassen.

11. Modulare Schaufensterpuppe (10) nach einem der vorhergehenden Ansprüche, ferner umfassend mindestens zwei entfernbare Materialien, die von mindestens einem der Vielzahl von einzelnen Schaufensterpuppe-Unterbauteilen (12) aufgenommen werden, wobei jeder der entfernbaren Materialien eine Dichte aufweist, die sich von der des mindestens einen anderen der mindestens zwei entfernbaren Materialien unterscheidet.

12. Modulare Schaufensterpuppe (10) nach einem der vorhergehenden Ansprüche, wobei die modulare Schaufensterpuppe 100cm oder mehr in mindestens einer Abmessung groß ist, wenn sie vollständig zusammengebaut ist.

13. Modulare Schaufensterpuppe (10) nach einem der vorhergehenden Ansprüche, wobei zwei oder mehr der Vielzahl von einzelnen Schaufensterpuppe-Unterbauteilen (12) dazu konfiguriert sind, eine Gliedmaße der modularen Schaufensterpuppe bereitzustellen.

14. Modulare Schaufensterpuppe (10) nach einem der vorhergehenden Ansprüche, wobei zwei oder mehr der Vielzahl von einzelnen Schaufensterpuppe-Unterbauteilen (12) dazu konfiguriert sind, einen Oberkörper der modularen Schaufensterpuppe bereitzustellen.

15. Modulare Schaufensterpuppe (10) nach einem der vorhergehenden Ansprüche, ferner umfassend eine Außenhülle (16), die dazu konfiguriert ist, selektiv zumindest teilweise zwei oder mehr der einzelnen Schaufensterpuppe-Unterbauteile (12) aufzunehmen.

## Revendications

1. Mannequin modulaire (10) comprenant :
une pluralité de sous-parties de mannequin individuelles (12) ; et
un matériau amovible contenu dans des compartiments respectifs des sous-parties de mannequin individuelles afin que le poids total du mannequin modulaire soit supérieur ou égal à 100 kg ;
**caractérisé en ce que** le mannequin modulaire (10) comprend en outre un ou plusieurs couplages souples (14) comprenant un matériau souple, chacun des couplages souples étant conçu pour raccorder de manière amovible deux sous-parties de mannequin individuelles, ou plus, de la pluralité de sous-parties de mannequin individuelles (12) les unes aux autres.

2. Mannequin modulaire (10) selon la revendication 1, un ou plusieurs des compartiments (12) pouvant chacun être scellés sélectivement.

3. Mannequin modulaire (10) selon l'une quelconque des revendications précédentes, une ou plusieurs des sous-parties de mannequin individuelles (12) comprenant chacune un tissu souple (18).

4. Mannequin modulaire (10) selon l'une quelconque des revendications précédentes, comprenant en outre un ou plusieurs moyens de fixation (20), chacun des moyens de fixation étant associé à au moins un couplage souple (14) respectif et conçu pour faciliter le raccord amovible de deux sous-parties de mannequin individuelles, ou plus, de la pluralité de sous-parties de mannequin individuelles (12) les unes aux autres.

5. Mannequin modulaire (10) selon la revendication 4, un ou plusieurs des moyens de fixation (20) comprenant chacun une partie mâle (24) et une partie femelle (26), ladite partie femelle étant conçue pour recevoir et retenir sélectivement la partie mâle.

6. Mannequin modulaire (10) selon l'une quelconque des revendications précédentes, comprenant en outre un ou plusieurs moyens de réglage (32), chacun des moyens de réglage étant associé à au moins un couplage souple (14) respectif et conçu pour permettre le réglage de la longueur de chaque couplage souple respectif.

7. Mannequin modulaire (10) selon la revendication 6, un ou plusieurs des moyens de réglage (32) comprenant chacun une fermeture à crochets et a boucles (28).

8. Mannequin modulaire (10) selon la revendication 6 ou 7, un ou plusieurs des moyens de réglage (32) comprenant chacun une boucle à glissière.

9. Mannequin modulaire (10) selon l'une quelconque des revendications précédentes, un ou plusieurs des couplages souples (14) étant conçues pour fournir sélectivement une articulation entre une première sous-partie de mannequin individuelle (12a) et une seconde sous-partie de mannequin individuelle (12b) lorsque la première sous-partie de mannequin individuelle et la seconde sous-partie de mannequin individuelle sont raccordées l'une à l'autre.

10. Mannequin modulaire (10) selon l'une quelconque des revendications précédentes, un ou plusieurs des couplages souples (14) comprenant chacun un tissu souple.

11. Mannequin modulaire (10) selon l'une quelconque des revendications précédentes, comprenant en outre au moins deux matériaux amovibles reçus par au moins une sous-partie de mannequin individuelle de la pluralité de sous-parties de mannequin individuelles (12), chacun des matériaux amovibles possédant une densité différente de celle du au moins un autre des au moins deux matériaux amovibles.

12. Mannequin modulaire (10) selon l'une quelconque des revendications précédentes, ledit mannequin modulaire possédant au moins une dimension supérieure ou égale à 100 cm lorsqu'il est complètement assemblé.

13. Mannequin modulaire (10) selon l'une quelconque des revendications précédentes, deux sous-parties de mannequin individuelles, ou plus, de la pluralité de sous-parties de mannequin individuelles (12) étant conçues pour former un membre du mannequin modulaire.

14. Mannequin modulaire (10) selon l'une quelconque des revendications précédentes, deux sous-parties de mannequin individuelles, ou plus, de la pluralité de sous-parties de mannequin individuelles (12) étant conçues pour former le torse du mannequin modulaire.

15. Mannequin modulaire (10) selon l'une quelconque des revendications précédentes, comprenant en outre un enveloppe externe (16) conçue pour recevoir sélectivement au moins partiellement deux, ou plus, des sous-parties de mannequin individuelles (12).
